# EUROPÄISCHE PATENTSCHRIFT

(11) **EP 1 668 975 B1**
(45) Veröffentlichungstag und Bekanntmachung des Hinweises auf die Patenterteilung: **16.01.2019**
(21) Anmeldenummer: 05021486.5
(22) Anmeldetag: 30.09.2005
(51) Int. Cl.: A01D 41/127

(54) **Selbstfahrende Arbeitsmaschine**
Self propelled working vehicle
Machine de travail automoteur

(30) Priorität: 09.12.2004 DE 102004059543
(43) Veröffentlichungstag der Anmeldung: 14.06.2006
(73) Patentinhaber: CLAAS Selbstfahrende Erntemaschinen GmbH, 33428 Harsewinkel (DE)
(72) Erfinder: Baumgarten, Joachim, Dr., 48361 Beelen (DE); Bussmann, Christoph, 33428 Harsewinkel (DE); Wilken, Andreas, 49143 Bissendorf (DE)
(74) Vertreter: CLAAS Gruppe

(56) Entgegenhaltungen:
- DE-U1- 20 001 144
- US-A- 4 487 002
- US-A- 4 513 562
- US-A- 5 911 669
- US-B1- 6 315 658
- US-B1- 6 336 051

## Beschreibung

Die Erfindungen betrifft eine Arbeitsmaschine gemäß dem Oberbegriff des Anspruchs 1.
In der EP 1 321 025 ist ein Mähdrescher mit einer automatischen Steuereinrichtung zur Regelung der Vorfahrtgeschwindigkeit offenbart. Die Steuereinrichtung verändert die Vorfahrtgeschwindigkeit zur Steuerung des Durchsatzes des Mähdreschers und wird aktiviert, sobald eine Schichthöhenerfassungseinrichtung den Eintritt von Erntegut in einer Fördereinrichtung des Mähdreschers nachweist.
Nachteilig bei dieser bekannten Erntemaschine ist, dass die automatische Steuerung die Vorfahrtgeschwindigkeit sprunghaft ändert, wenn der Mähdrescher in den Bestand einfährt und der Vorfahrtregler eingeschaltet wird.
Bei bekannten Mähdreschern bleibt der Vorfahrtregler auch beim Verlassen des Bestandes oder beim Durchfahren von Lücken auf dem Feld eingeschaltet und beschleunigt den Mähdrescher, um den sinkenden Durchsatz auszugleichen. Der Fahrer deaktiviert die automatische Steuerung in diesen Fällen und regelt die Fahrgeschwindigkeit manuell, um beispielsweise den Mähdrescher am Feldende mit einer angepassten Fahrgeschwindigkeit zu wenden. Die sprunghafte Änderung der Fahrgeschwindigkeit beim Hinein- bzw. Herausfahren aus dem Bestand führt oftmals zu Überreaktionen des Fahrers, der den Mähdrescher dann schnellstmöglich bis zum Stillstand abbremst, wodurch der Mähdrescher ins Schaukeln gerät. Nachteilig ist auch, dass der Mähdrescher vor dem Eintritt in den Bestand nicht auf eine optimale Eintrittsgeschwindigkeit beschleunigt bzw. verzögert wird.
Aus der US 4,513,562 A1 sowie der US 4,487,002 ist eine landwirtschaftliche Arbeitsmaschine gemäß dem Oberbegriff des Anspruches 1 bekannt.

Der Erfindung liegt daher die Aufgabe zugrunde, eine Erntemaschine zu schaffen, bei der der Fahrer durch den Vorfahrtregler von der Fahrgeschwindigkeitsregelung entlastet wird.
Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.
Die Fahrgeschwindigkeit wird nach wenigstens zwei Fahrstrategien geregelt, so dass der Fahrer auch in unterschiedlichen Betriebssituationen von der Fahrgeschwindigkeitsregelung entlastet wird. Der Vorfahrtregler regelt die Fahrgeschwindigkeit derart, dass der Mähdrescher weder abrupt beschleunigt noch gebremst wird, so dass der Fahrer die Geschwindigkeitsänderungen als angenehm empfindet und jederzeit Vertrauen in die automatische Regelung hat.
Indem die Fahrstrategie abhängig von dem Leerbetrieb oder dem Einsatzbetrieb änderbar ist, wird die Fahrgeschwindigkeitsregelung individuell an den jeweiligen Betrieb angepasst.

Die Regelung der Fahrgeschwindigkeit ist im Leerbetrieb von Erntegutparametern und/oder von Arbeitsparametern abgekoppelt, so dass im Leerbetrieb die Fahrgeschwindigkeit unabhängig vom Erntegutdurchsatz und/oder von der Effektivität der Erntegutaufbereitung separat geregelt werden kann.
Dadurch, dass die Regelung der Fahrgeschwindigkeit im Einsatzbetrieb abhängig von wenigstens einem Erntegutparameter und/oder von wenigstens einem Arbeitsparameter der Erntemaschine ist, kann die Einstellung der Fahrgeschwindigkeit einen geforderten Erntegutdurchsatz und gleichzeitig eine geforderte Effektivität der Erntegutaufbereitung berücksichtigen.
Dadurch, dass die Fahrgeschwindigkeit über einen Vorfahrtregler durchgängig selbsttätig geregelt wird, ist der Fahrer während der Erntefahrt auf dem Feld ununterbrochen von der Fahrgeschwindigkeitsregelung befreit.

Die Regelung der Fahrgeschwindigkeit ist abhängig von wenigstens einem Erntegutparameter und/oder wenigstens einem Arbeitsparameter der Arbeitsmaschine geregelt, wenn der Vorfahrtregler erkennt, dass sich die Arbeitsmaschine im Einsatzbetrieb befindet, so dass der Vorfahrtregler die für die Fahrgeschwindigkeit relevanten Größen berücksichtigt.
Die Regelung der Fahrgeschwindigkeit ist von wenigstens einem Erntegutparameter und/oder wenigstens einem Arbeitsparameter abgekoppelt, wenn der Vorfahrtregler erkennt, dass sich die Maschine im Leerbetrieb befindet, so dass der Vorfahrtregler die Fahrgeschwindigkeit unabhängig von in diesem Fall nicht relevanten Größen regelt.
Damit der Fahrer weiter entlastet wird und der Vorfahrtregler automatisch die Fahrstrategie wechselt, wenn sich die Betriebszustände ändern, ist der Vorfahrtregler mit einem oder mehreren Sensoren verbunden und erkennt durch die von dem oder den Sensoren erzeugten Signale, ob sich die Arbeitsmaschine im Leerbetrieb oder im Einsatzbetrieb befindet.
Der oder die Sensoren detektieren vorteilhafterweise wenigstens einen Betriebsstatus der Arbeitsorgane, damit der Vorfahrtregler erkennt, ob die für den jeweiligen Betrieb erforderlichen Arbeitsorgane eingeschaltet bzw. optimal eingestellt sind.
In einer weiteren Ausgestaltung der Erfindung detektieren der oder die Sensoren die Fahrgeschwindigkeit und die Fahrtrichtung der Arbeitsmaschine, damit der Vorfahrtregler erkennt, in welcher Richtung der Mähdrescher fährt und ob der Mähdrescher mit mindestens einer Minimalgeschwindigkeit fährt.

Der oder die Sensoren detektieren einen Erntegutstrom in der Arbeitsmaschine, damit der Vorfahrtregler erkennt, ob der Mähdrescher während der Erntefahrt Getreide erntet.

Vorteilhafterweise ist die Fahrgeschwindigkeit im Leerbetrieb konstant und weist einen Wert auf, der annähernd dem Wert der Fahrgeschwindigkeit am Ende des Einsatzbetriebes beim Wechsel zum Leerbetrieb entspricht, so dass die Arbeitsmaschine vom Vorfahrtregler weder abrupt beschleunigt noch abgebremst wird.

In einer vorteilhaften Ausführung der Erfindung ist die Arbeitsmaschine ein Mähdrescher, der im Einsatzbetrieb durch einen Bestand und im Leerbetrieb durch ein Vorgewende fährt.

Wenn wenigstens eines der von dem oder den Sensoren generierten Signale abhängig von einer für den Leerbetrieb oder den Einsatzbetrieb spezifischen Bedienung durch den Fahrer ist, kann ermittelt werden, ob die für den jeweiligen Betrieb erforderlichen Arbeitsorgane eingeschaltet sind und/oder die für den jeweiligen Betrieb erforderliche Einstellung aufweisen.

Wenn wenigstens eines von dem oder den Sensoren generierten Signale abhängig von der Position der Arbeitsmaschine ist, kann anhand des zurückgelegten Fahrweges festgestellt werden, welches Feldstück bereits befahren wurde und folglich keinen Bestand mehr aufweist, so dass Lücken im Bestand bereits vor dem Überfahren erkannt werden können.

In weiterer vorteilhafter Ausgestaltung der Erfindung erfolgt die Auswertung der Signale in einer Steuer- und Regeleinheit.

Weitere vorteilhafte Ausgestaltungen sind Gegenstand weiterer Unteransprüche und werden nachfolgend an Hand eines in mehreren Figuren dargestellten Ausführungsbeispiels näher erläutert.

Es zeigen:
- Fig.1: eine Draufsicht eines Mähdreschers bei der Erntefahrt auf dem Feld,
- Fig.2: eine Seitenansicht eines erfindungsgemäßen Mähdreschers,
- Fig.3: eine schematische Darstellung eine Vorfahrtreglers mit einer Steuer- und Regeleinheit.

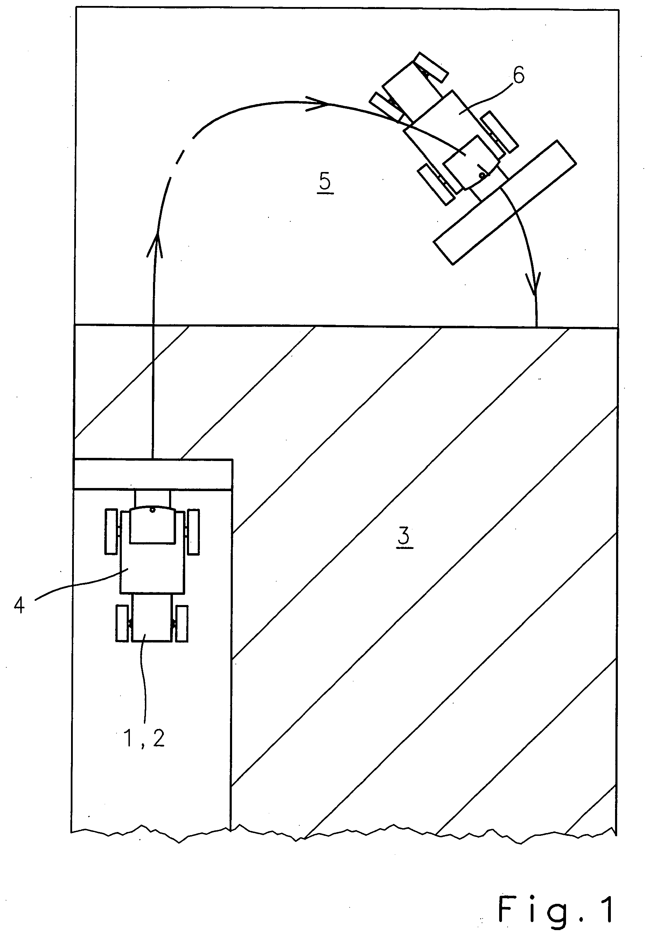

Fig.1 zeigt eine als Mähdrescher 1 ausgeführte Arbeitsmaschine 2 bei der Erntefahrt. Fährt der Mähdrescher 1 in den auf dem Feld wachsenden, aus Getreide bestehenden Bestand 3, befindet er sich in einem Einsatzbetrieb 4, bei dem er das Getreide mäht, aufnimmt und aufbereitet. Sobald der Mähdrescher 1 den Bestand 3 verlässt um außerhalb des Bestandes 3 im Vorgewende 5 zu wenden oder der Bestand 3 beispielsweise durch eine Lücke unterbrochen ist, befindet sich der Mähdrescher 1 im Leerbetrieb 6, da kein Getreide vorhanden ist.

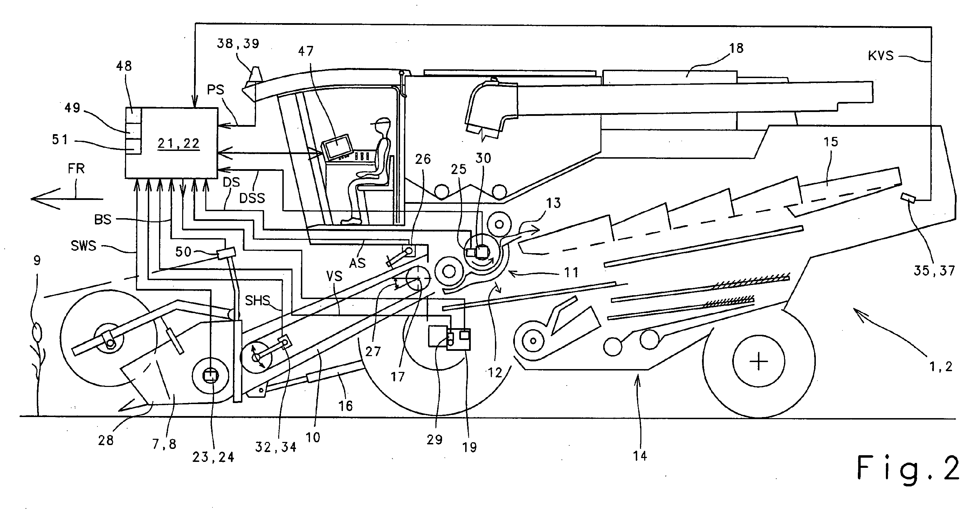

Die in Fig.2 teilweise dargestellte, als Mähdrescher 1 ausgeführte selbstfahrende Arbeitsmaschine 2 nimmt frontseitig ein als Schneidwerk 7 ausgeführtes Vorsatzgerät 8 auf, welches das auf dem Feld gewachsene Erntegut 9 mäht und anschließend einem Schrägförderer 10 zuführt. Der Schrägförderer 10 übergibt das Erntegut 9 an ein nachgeschaltetes Dreschwerk 11, welches das Erntegut 9 aufbereitet, wobei es in ein Korn-Spreu-Gemisch 12 und ein aus ausgedroschenen Halmen bestehenden Gutstrom 13 geteilt wird. Das Korn-Spreu-Gemisch 12 wird zu einer Reinigungseinrichtung 14 gefördert, die die Körner von den Nichtkornbestandteilen, d. h. von Halm- und Spreuteilen trennt. Der aus ausgedroschenen Halmen bestehende Gutstrom 13 gelangt auf einen Hordenschüttler 15, der den Gutstrom 13 in den rückwärtigen Bereich des Mähdreschers 1 fördert und dabei im Gutstrom 13 vorhandene Körner, Kurzstroh und Spreu abtrennt, die ebenfalls der Reinigungseinrichtung 14 zugeführt werden. Der Schrägförderer 10 wird über Hubzylinder 16 die einends schwenkbeweglich am Mähdrescher 1 und kolbenstangenseitig schwenkbeweglich mit dem Schrägförderer 10 verbunden sind um eine quer zur Fahrtrichtung FR angeordnete Schwenkachse 17 verschwenkbar geführt. Der Mähdrescher 1 weist einen Verbrennungsmotor 18 auf, der einen Fahrantrieb 19 zum Antrieb der Vorderräder 20 des Mähdreschers 1, einen Dreschwerkantrieb zum Antrieb des Dreschwerks 11 und einen Schneidwerksantrieb zum Antrieb des Schneidwerks 7 antreibt.
Der Fahrantrieb 19 ist mit einem Vorfahrtregler 21 ausgestattet, der die Fahrgeschwindigkeit V des Mähdreschers 1 durchgängig selbsttätig regelt. Der Vorfahrtregler 21 weist eine Steuer- und Regeleinheit 22 auf, die mit mehreren Sensoren 23, 25, 26, 29, 30, 34, 37, 39, 50 in Verbindung steht, die am Mähdrescher 1 und am Schneidwerk 7 angeordnet sind.
Am vorderen Ende des Schneidwerks 7 ist ein Bestandssensor 50 angeordnet, der den in Fahrtrichtung FR vor dem Mähdrescher 1 liegenden Bestand sensiert. Der Bestandsensor 50 generiert in Abhängigkeit vom Feldbewuchs Bestandssignale BS.
Ein weiterer Sensor 25 überwacht einen Ein/Aus-Schalter 24 für das Dreschwerk 11 und generiert in Abhängigkeit vom Betriebsstatus des Dreschwerks 11 ein Dreschwerksignal DS. Ein dritter Sensor 23 überwacht einen Ein/Aus- Schalter 24 für das Schneidwerk 7 und generiert in Abhängigkeit vom Betriebsstatus des Schneidwerks 7 ein Schneidwerkssignal SWS.
Ein Drehwinkelsensor 26 ist der Schwenkachse 17 des Schrägförderers 10 zugeordnet und detektiert auf an sich bekannte Weise einen Verdrehwinkel 27 zwischen dem Schrägförderer 10 und dem Mähdrescher 1. Der Drehwinkelsensor 26 generiert bei einem bestimmten Verdrehwinkel 27, bei dem das Schneidwerk 7 eine Arbeitsposition 28 einnimmt, ein Arbeitspositionsignal AS.
Am Fahrantrieb 19 ist ein Drehzahlsensor 29 angeordnet, der auf an sich bekannte Weise die Fahrgeschwindigkeit V und die Bewegungsrichtung FR des Mähdreschers 1 detektiert. Der Drehzahlsensor 29 generiert proportional zur Fahrgeschwindigkeit V bei Vorwärtsfahrt des Mähdreschers 1 ein Fahrgeschwindigkeitssignal VS.
Ein Durchsatzsensor 30 ist auf an sich bekannte Weise an dem Dreschwerkantrieb angeordnet und detektiert ein Dreschtrommeldrehmoment, das abhängig vom Erntegutdurchsatz durch das Dreschwerk 11 ist. Der Durchsatzsensor 30 generiert proportional zum Erntegutdurchsatz durch das Dreschwerk 7 ein Durchsatzsignal DSS.
Der Schrägförderer 10 weist eine an sich bekannte Schichthöhenerfassungseinrichtung 32 auf, die die Schichthöhe des Erntegutes im Schrägförderer 10 detektiert. Die Schichthöhenerfassungseinrichtung 32 weist einen Sensor 34 auf, der ein Schichthöhensignal SHS generiert, das proportional zur Schichthöhe ist.
Am Ende des Hordenschüttlers 15 ist eine Körnerstrommesseinrichtung 35 angeordnet, die einen Abscheideverlust im Gutstrom 13 sensiert. Die Körnerstrommesseinrichtung 35 weist mehrere Klopfsensoren 37 auf, die auf an sich bekannte Weise Kornverlustsignale KVS generieren, die proportional zum Abscheideverlust sind.
Der Mähdrescher ist zusätzlich mit einer Ortungseinrichtung 38 ausgestattet, die die Position des Mähdreschers 1 sensiert. Die Ortungseinrichtung 38 weist Sensoren 39 auf, die ein Positionssignal PS generieren, das abhängig vom Standort des Mähdreschers 1 ist.

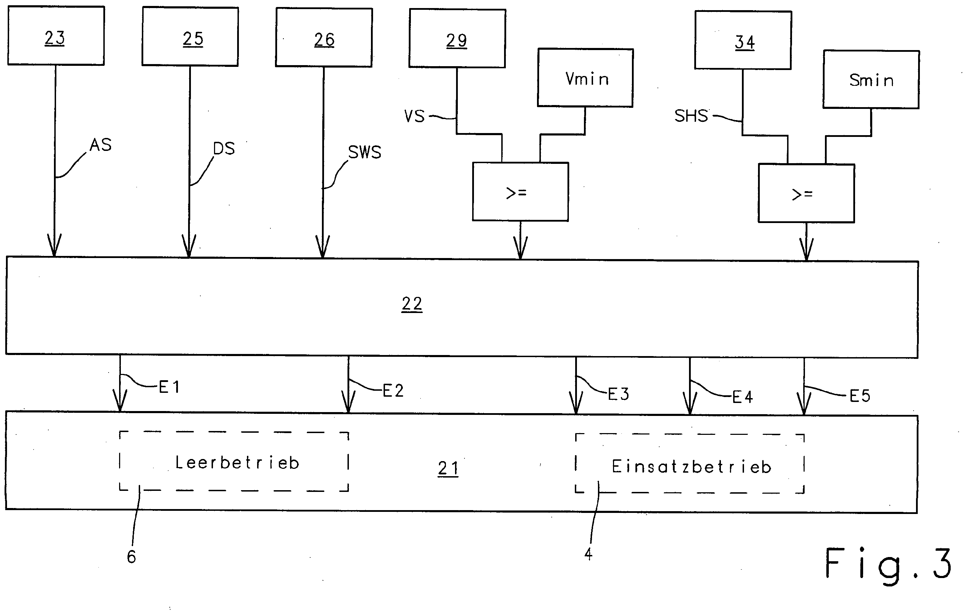

Fig.3 zeigt schematisch den Vorfahrtregler 21 mit der Steuer- und Regeleinheit 22 und einen Teil der mit der Steuer- und Regeleinheit 22 verbundenen Sensoren 23, 25, 26, 29, 30, 34, 37, 39, 50.
Die Steuer- und Regeleinrichtung 22 vergleicht die von den Sensoren 34 erzeugten Schichthöhensignale SHS mit einer vorgegebenen minimalen Schichthöhe S_{MIN}. Ist die ermittelte Schichthöhe gleich groß oder größer als die minimale Schichthöhe S_{MIN}, generiert die Steuer- und Regeleinheit 22 ein Einsatzbetriebssignal E5, welches an den Vorfahrtregler 21 übermittelt wird. Bei Empfang des Einsatzbetriebssignals E5 erkennt der Vorfahrtregler 21, das der Mähdrescher 1 sich im Einsatzbetrieb 4 befindet, empfängt der Vorfahrtregler 21 kein Einsatzbetriebsignal E5 erkennt der Vorfahrtregler 21, dass sich der Mähdrescher im Leerbetrieb 6 befindet.

Um die Qualität der Erkennung zu erhöhen, ist eine Ausführung denkbar bei der der Vorfahrtregler 21 beispielsweise den Einsatzbetrieb 4 und den Leerbetrieb 6 nur dann erkennt, wenn weitere Einsatzbetriebssignale E1- E4 an den Vorsatzregler 21 übermittelt werden.

Die Steuer- und Regeleinheit 22 vergleicht das von dem Sensor 25 erzeugte Dreschwerksignal DS mit einem vorgegebenen Einschaltwert und ermittelt damit den Betriebszustand des Dreschwerks 11. Ist das Dreschwerk 11 eingeschaltet, generiert die Steuer- und Regeleinheit 22 ein erstes Einsatzbetriebssignal E1.
Ebenso ist es denkbar, das die Steuer- und Regeleinheit 22 das von dem Sensor 23 erzeugte Schneidwerksignal SWS mit einem Einschaltwert für das Schneidwerk 7 vergleicht und damit den Betriebszustand des Schneidwerks 7 ermittelt. Ist das Schneidwerk 7 eingeschaltet, generiert die Steuer- und Regeleinheit 22 ein zweites Einsatzbetriebssignal E2.
Vorstellbar ist auch, das die Steuer- und Regeleinheit 22 das von dem Drehwinkelsensor 26 erzeugte Arbeitspositionssignal AS mit einem vorgegebenen Arbeitspositionwert vergleicht und dadurch die Arbeitsposition 28 des Schneidwerks 7 ermittelt. Steht das Schneidwerk 7 in der Arbeitsposition 28, generiert die Steuer- und Regeleinheit 22 ein drittes Einsatzbetriebssignal E3.
Weiterhin ist es möglich, das die Steuer- und Regeleinrichtung 22 die von dem Drehzahlsensor 29 erzeugten Fahrgeschwindigkeitssignale VS mit einem Fahrgeschwindigkeitsollwert vergleicht und erkennt, ob sich der Mähdrescher 1 mit einer minimalen Fahrgeschwindigkeit V_{MIN} bewegt. Ist die Fahrgeschwindigkeit des Mähdreschers 1 gleich groß oder größer als die minimale Fahrgeschwindigkeit V_{MIN} , generiert die Steuer- und Regeleinheit 22 ein viertes Einsatzbetriebssignal E4.

In einer weiteren Ausführung der Erfindung ist denkbar, das der Vorfahrtregler 21 über die Steuer- und Regeleinheit 22 mit dem Bestandsensor 50 verbunden ist und der Vorfahrtregler 21 in Abhängigkeit von den von dem Bestandssensor 50 generierten Bestandsignalen BS erkennt, ob sich der Mähdrescher 1 im Bestand oder außerhalb des Bestandes bewegt, das heißt, ob sich der Mähdrescher 1 im Leerbetrieb 6 oder im Einsatzbetrieb 4 befindet.

Ebenso ist es vorstellbar, dass der Vorfahrtregler 21 mit der Ortungsvorrichtung 38 verbunden ist und der Vorfahrtregler 21 in Abhängigkeit von dem bereits zurückgelegten Fahrweg sowie der Schnittbreite des Schneidwerks 7 und einer Schlagkarte erkennt, ob sich der Mähdrescher im Leerbetrieb 6 oder im Einsatzbetrieb 4 befindet.

Die Fahrgeschwindigkeit V des Mähdreschers 1 wird erfindungsgemäß abhängig vom Einsatzbetrieb 4 oder vom Leerbetrieb 6 nach verschiedenen Fahrstrategien geregelt.
Wenn der Vorfahrtregler 21 erkennt, dass sich der Mähdrescher 1 im Einsatzbetrieb 4 befindet, regelt der Vorfahrtregler 21 die Fahrgeschwindigkeit V in Abhängigkeit von einem Erntegutparameter wie beispielsweise den von der Körnerstrommesseinrichtung 35 ermittelten Abscheideverlust und/oder einem Arbeitsparameter des Mähdreschers 1 wie beispielsweise der Schichthöhe im Schrägförderer 10.
Über eine Bedieneinheit 47 die mit dem Vorfahrtregler 21 verbunden ist, gibt der Fahrer eine Komverlustgrenze 48 vor, mit der der Vorfahrtregler 21 eine Sollschichthöhe für den Schrägförderer 10 berechnet. Der Vorfahrtregler 21 regelt die Fahrgeschwindigkeit V derart, dass die Schichthöhe die berechnete Sollschichthöhe 49 erreicht. Der Vorfahrtregler 21 vergleicht den Abscheideverlust mit der Kornverlustgrenze 48. Ist der Abscheideverlust über einen bestimmten Zeitraum hinaus größer als die Kornverlustgrenze 48 wird die Fahrgeschwindigkeit V vermindert, bis der Abscheideverlust der Kornverlustgrenze 48 entspricht und zugleich wird eine neue Sollschichthöhe 49 festgelegt. Wenn der Abscheideverlust über einen vorgegebenen Zeitraum kleiner ist als die Kornverlustgrenze 48 wird die Fahrgeschwindigkeit V erhöht, bis der Abscheideverlust der Kornverlustgrenze 48 entspricht. Der Vorfahrtregler 21 aktualisiert die Schichthöhe durch Änderung der Fahrgeschwindigkeit V während des Einsatzbetriebes 4 kontinuierlich, um sich an die unterschiedlichen Erntebedingungen anzupassen.
Wenn der Vorfahrtregler 21 erkennt, dass sich der Mähdrescher 1 im Leerbetrieb 6 befindet, ist die Regelung der Fahrgeschwindigkeit V durch den Vorfahrtregler 21 von Emtegutparametem und/oder Arbeitsparametern des Mähdreschers 1 abgekoppelt. Die Fahrgeschwindigkeit V im Leerbetrieb 6 kann über eine beliebige Kennlinie in dem Vorfahrtregler 21 gesteuert werden. In einer ersten Ausführung der Erfindung ist die Fahrgeschwindigkeit annähernd konstant und weist einen Wert auf, der annähernd dem Wert der Fahrgeschwindigkeit V am Ende des Einsatzbetriebes 4 beim Übergang zum Leerbetrieb 6 entspricht, wenn der Mähdrescher 1 aus dem Bestand herausfährt. Es ist ebenso möglich den Mähdrescher vor dem Eintritt in den Bestand auf eine Eintrittsgeschwindigkeit abzubremsen oder zu beschleunigen.

Sobald das Schneidwerk 7 und/oder das Dreschwerk 11 abgeschaltet und/oder das Schneidwerk 7 aus der Arbeitsposition 28 herausgeschwenkt und/oder der Mähdrescher 1 langsamer als mit der minimalen Fahrgeschwindigkeit V_{MIN} fährt, das heißt, das sich der Mähdrescher weder im Einsatzbetrieb 4 noch im Leerbetrieb 6 befindet und das eines oder mehrere der Einsatzbetriebssignale E1-E4 nicht an den Vorfahrtregler 21 übermittelt werden, schaltet der Vorfahrtregler 21 ab und der Fahrer regelt die Fahrgeschwindigkeit V manuell über einen Bedienhebel 51. Es ist jedoch auch möglich das der Fahrer den Vorfahrtregler 21 durch Betätigen des Bedienhebels 51 deaktiviert.

Dem Fahrer wird auf einer Anzeigeeinheit angezeigt ob sich der Mähdrescher 1 im Einsatzbetrieb 4 oder im Leerbetrieb 6 befindet und mit welcher Fahrstrategie der Vorfahrtregler 21 die Fahrgeschwindigkeit V des Mähdreschers 1 regelt.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung, wie beansprucht, zu verlassen. Die Erfindung könnte beispielweise ebenfalls bei einem Traktor mit wenigstens einem angekoppelten Arbeitsgerät zum Einsatz kommen. Das Arbeitsgerät könnte beispielsweise ein Pflug sein, der in einem Einsatzbetrieb in abgesenkter Stellung in den Feldboden eingreift und in einem Leerbetrieb in angehobener Stellung oberhalb des Feldbodens angeordnet ist.

**Bezugszeichenliste:**

| | | | |
|---|---|---|---|
| 1 | Mähdrescher | 32 | Schichthöhenerfassungseinrichtung |
| 2 | selbstfahrende Arbeitsmaschine | 34 | Sensor |
| 3 | Bestand | 35 | Kömerstrommesseinrichtung |
| 4 | Einsatzbetrieb | 37 | Klopfsensoren |
| 5 | Vorgewende | 38 | Ortungsvorrichtung |
| 6 | Leerbetrieb | 39 | Sensoren |
| 7 | Schneidwerk | 47 | Bedieneinheit |
| 8 | Vorsatzgerät | 48 | Kornverlustgrenze |
| 9 | Emtegut | 49 | Solldruck |
| 10 | Schrägförderer | 50 | Bestandssensor |
| 11 | Dreschwerk | 51 | Bedienhebel |
| 12 | Korn-Spreu-Gemisch | | |
| 13 | Gutstrom | | |
| 14 | Reinigungseinrichtung | E1 | Einsatzbetriebssignal |
| 15 | Hordenschüttler | E2 | Einsatzbetriebssignal |
| 16 | Hubzylinder | E3 | Einsatzbetriebssignal |
| 17 | Schwenkachse | E4 | Einsatzbetriebssignal |
| 18 | Verbrennungsmotor | E5 | Einsatzbetriebssignal |
| 19 | Fahrantrieb | BS | Bestandssignale |
| 20 | Vorderräder | SHS | Schichthöhensignal |
| 21 | Vorfahrtregler | DSS | Durchsatzsignal |
| 22 | Steuer- und Regeleinheit | VS | Fahrgeschwindigkeitssignal |
| 23 | weiterer Sensor | AS | Arbeitspositionsignal |
| 24 | Ein/Aus-Schalter Schneidwerk | SWS | Schneidwerkssignal |
| 25 | dritter Sensor | DS | Dreschwerksignal |
| 26 | Drehwinkelsensor | KVS | Kornverlustsignal |
| 27 | Verdrehwinkel | V | Fahrgeschwindigkeit |
| 28 | Arbeitsstellung | PS | Positionssignal |
| 29 | Drehzahlsensor | V_{MIN} | minimale Fahrgeschwindigkeit |
| 30 | Drehsatzsensor | S_{MIN} | minimale Schichthöhe |

## Patentansprüche

1. Selbstfahrende Arbeitsmaschine (2) mit Arbeitsorganen (7, 11, 14) deren Arbeitsparameter einstellbar sind und die mit einer Fahrgeschwindigkeit (V) bewegt wird, wobei die Fahrgeschwindigkeit (V) nach wenigstens zwei Fahrstrategien automatisch geregelt wird,
• wobei die Fahrstrategie abhängig von dem Leerbetrieb (6) oder dem Einsatzbetrieb (4) der Arbeitsmaschine (2) änderbar ist,
• wobei ein Vorfahrtregler (21) mit einem oder mehreren Sensoren (23, 25, 26, 29, 30, 34, 37, 39) verbunden ist und durch die Auswertung der von dem oder den Sensoren (23, 25, 26, 29, 30, 34, 37, 39, 50) generierten Signale (BS, SHS, DSS, VS, AS, SWS, DS, KVS) erkennt, ob sich die Arbeitsmaschine (2) im Leerbetrieb (6) oder im Einsatzbetrieb (4) befindet,
• wobei die Fahrgeschwindigkeit (V) abhängig von wenigstens einem Erntegutparameter und/oder wenigstens einem Arbeitsparameter der Arbeitsmaschine (2) geregelt wird, wenn der Vorfahrtregler (21) erkennt, dass sich die Arbeitsmaschine (2) im Einsatzbetrieb (4) befindet,
**dadurch gekennzeichnet,**
**dass** die Regelung der Fahrgeschwindigkeit (V) von Erntegutparametern und/oder Arbeitsparametern der Arbeitsmaschine (2) abgekoppelt ist, wenn der Vorfahrtregler (21) erkennt, das sich die Arbeitsmaschine (2) im Leerbetrieb (6) befindet, so dass der Vorfahrtregler (21) die Fahrgeschwindigkeit (V) unabhängig von in diesem Fall nicht relevanten Größen regelt, wobei die Fahrgeschwindigkeit (V) im Leerbetrieb (6) durch den Vorfahrtregler (21) über eine Kennlinie gesteuert wird.

2. Selbstfahrende Arbeitsmaschine nach Anspruch 1,
**dadurch gekennzeichnet,**
**dass** die Fahrgeschwindigkeit (V) über den Vorfahrtregler (21) durchgängig selbsttätig geregelt wird.

3. Selbstfahrende Arbeitsmaschine nach Anspruch 1 oder 2,
**dadurch gekennzeichnet,**
**dass** der oder die Sensoren (23, 25, 26) wenigstens einen Betriebsstatus der Arbeitsorgane (11, 7) der Arbeitsmaschine (2) detektieren.

4. Selbstfahrende Arbeitsmaschine nach wenigstens einem der vorhergehenden Ansprüche,
**dadurch gekennzeichnet,**
**dass** der oder die Sensoren (29) die Fahrgeschwindigkeit (V) und die Fahrtrichtung (FR) der Arbeitsmaschine (2) detektieren.

5. Selbstfahrende Arbeitsmaschine nach wenigstens einem der vorhergehenden Ansprüche,
**dadurch gekennzeichnet,**
**dass** der oder die Sensoren (30, 34) einen Erntegutdurchsatz in der Arbeitsmaschine (2) detektieren.

6. Selbstfahrende Arbeitsmaschine nach wenigstens einem der vorhergehenden Ansprüche,
**dadurch gekennzeichnet,**
**dass** die Fahrgeschwindigkeit (V) im Leerbetrieb (6) konstant ist und einen Wert aufweist, der annähernd dem Wert der Fahrgeschwindigkeit (V) am Ende des Einsatzbetriebes (4) beim Übergang zum Leerbetrieb (6) entspricht.

7. Selbstfahrende Arbeitsmaschine nach wenigstens einem der vorhergehenden Ansprüche,
**dadurch gekennzeichnet,**
**dass** die Arbeitsmaschine (2) ein Mähdrescher (1) ist, der im Einsatzbetrieb (4) durch einen Bestand (3) und im Leerbetrieb (6) im Vorgewende (5) fährt.

8. Selbstfahrende Arbeitsmaschine nach Anspruch 7,
**dadurch gekennzeichnet,**
**dass** der Vorfahrtregler (21) die Fahrgeschwindigkeit (V) in Abhängigkeit von dem von der Körnerstrommesseinrichtung (35) ermittelten Abscheideverlust und/oder der Schichthöhe im Schrägförderer (10) regelt, wenn er erkennt, dass sich der Mähdrescher (1) im Einsatzbetrieb (4) befindet.

9. Selbstfahrende Arbeitsmaschine nach wenigstens einem der vorhergehenden Ansprüche,
**dadurch gekennzeichnet,**
**dass** wenigstens eines der von dem oder den Sensoren (23, 25) generierten Signale (DS, SWS) abhängig von einer für den Leerbetrieb (6) oder Einsatzbetrieb (4) spezifischen Bedienung durch den Fahrer ist.

10. Selbstfahrende Arbeitsmaschine nach wenigstens einem der vorhergehenden Ansprüche,
**dadurch gekennzeichnet,**
**dass** wenigstens eines der von dem oder den Sensoren (39) generierten Signale (PS) abhängig von der Position der Arbeitsmaschine (2) ist.

11. Selbstfahrende Arbeitsmaschine nach wenigstens einem der vorhergehenden Ansprüche,
**dadurch gekennzeichnet,**
**dass** die Auswertung der Signale (BS, SHS, DSS, VS, AS, SWS,DS, KVS) in einer Steuer- und Regeleinheit (22) erfolgt.

## Claims

1. Self-propelled working machine (2) with working units (7, 11, 14), the working parameters of which are adjustable and which is moved at a ground speed (V), wherein the ground speed (V) is regulated automatically according to at least two travel strategies,
• wherein the travel strategy is changeable depending on the "non-use" mode (6) or the "in-use" mode (4) of the working machine (2),
• wherein a forward-travel regulator (21) is connected to one or more sensors (23, 25, 26, 29, 30, 34, 37, 39) and, through evaluation of the signals (BS, SHS, DSS, VS, AS, SWS, DS, KVS) generated by the sensor or sensors (23, 25, 26, 29, 30, 34, 37, 39, 50), detects whether the working machine (2) is in the "non-use" mode (6) or in the "in-use" mode (4),
• wherein the ground speed (V) is regulated depending on at least one crop parameter and/or at least one working parameter of the working machine (2) when the forward-travel regulator (21) detects that the working machine (2) is in the "in-use" mode (4),
**characterized in that**
the regulation of the ground speed (V) is decoupled from crop parameters and/or working parameters of the working machine (2) when the forward-travel regulator (21) detects that the working machine (2) is in the "non-use" mode (6), with the result that the forward-travel regulator (21) regulates the ground speed (V) independently of parameters which are not relevant in this case, wherein the ground speed (V) in the "non-use" mode (6) is controlled by the forward-travel regulator (21) via a characteristic curve.

2. Self-propelled working machine according to claim 1,
**characterized in that**
the ground speed (V) is continuously and automatically regulated by the forward-travel regulator (21).

3. Self-propelled working machine according to claim 1 or 2,
**characterized in that**
the sensor or sensors (23, 25, 26) detect at least one operating status of the working units (11, 7) of the working machine (2).

4. Self-propelled working machine according to at least one of the preceding claims,
**characterized in that**
the sensor or sensors (29) detect the ground speed (V) and the direction of travel (FR) of the working machine (2).

5. Self-propelled working machine according to at least one of the preceding claims,
**characterized in that**
the sensor or sensors (30, 34) detect a crop-material throughput in the working machine (2).

6. Self-propelled working machine according to at least one of the preceding claims,
**characterized in that**
the ground speed (V) in the "non-use" mode (6) is constant and has a value which corresponds approximately to the value of the ground speed (V) at the end of the "in-use" mode (4) during transition to the "non-use" mode (6).

7. Self-propelled working machine according to at least one of the preceding claims,
**characterized in that**
the working machine (2) is a combine harvester (1) which in the "in-use" mode (4) travels through a crop (3) and in the "non-use" mode (6) travels in the headland (5).

8. Self-propelled working machine according to claim 7,
**characterized in that**
the forward-travel regulator (21) regulates the ground speed (V) as a function of the separation losses determined by the grain stream measuring device (35) and/or the crop volume in the inclined conveyor (10) when it detects that the combine harvester (1) is in the "in-use" mode (4).

9. Self-propelled working machine according to at least one of the preceding claims,
**characterized in that**
at least one of the signals (DS, SWS) generated by the sensor or sensors (23, 25) depends on an operation by the driver that is specific to the "non-use" mode (6) or the "in-use" mode (4).

10. Self-propelled working machine according to at least one of the preceding claims,
**characterized in that**
at least one of the signals (PS) generated by the sensor or sensors (39) depends on the position of the working machine (2).

11. Self-propelled working machine according to at least one of the preceding claims,
**characterized in that**
the signals (BS, SHS, DSS, VS, AS, SWS, DS, KVS) are evaluated in a control and regulating unit (22).

## Revendications

1. Machine de travail automotrice (2) comprenant des organes de travail (7, 11, 14) dont les paramètres de travail sont réglables et qui est déplacée à une vitesse de marche (V), la vitesse de marche (V) étant régulée automatiquement selon au moins deux stratégies de marche,
• la stratégie de marche étant modifiable en fonction du fonctionnement à vide (6) ou du fonctionnement actif (4) de la machine de travail (2),
• un régulateur de marche avant (21) étant relié à un ou plusieurs capteurs (23, 25, 26, 29, 30, 34, 37, 39) et détectant, par l'analyse des signaux (BS, SHS, DSS, VS, AS, SWS, DS, KVS) générés par le ou les capteurs (23, 25, 26, 29, 30, 34, 37, 39, 50), si la machine de travail (2) se trouve en fonctionnement à vide (6) ou en fonctionnement actif (4),
• la vitesse de marche (V) étant régulée en fonction d'au moins un paramètre de produit récolté et/ou d'au moins un paramètre de travail de la machine de travail (2) si le régulateur de marche avant (21) détecte que la machine de travail (2) se trouve en fonctionnement actif (4),
**caractérisée en ce que** la régulation de la vitesse de marche (V) est découplée de paramètres de produit de récolte et/ou de paramètres de travail de la machine de travail (2) si le régulateur de marche avant (21) détecte que la machine de travail (2) se trouve en fonctionnement à vide (6), de sorte que le régulateur de marche avant (21) régule la vitesse de marche (V) indépendamment de grandeurs dans ce cas non pertinentes, la vitesse de marche (V) en fonctionnement à vide (6) étant commandée par le régulateur de marche avant (21) par l'intermédiaire d'une courbe caractéristique.

2. Machine de travail automotrice selon la revendication 1, **caractérisée en ce que** la vitesse de marche (V) est régulée automatiquement sans interruption par l'intermédiaire du régulateur de marche avant (21).

3. Machine de travail automotrice selon la revendication 1 ou 2, **caractérisée en ce que** le ou les capteurs (23, 25, 26) détectent au moins un statut de fonctionnement des organes de travail (11, 7) de la machine de travail (2).

4. Machine de travail automotrice selon au moins une des revendications précédentes, **caractérisée en ce que** le ou les capteurs (29) détectent la vitesse de marche (V) et le sens de marche (FR) de la machine de travail (2).

5. Machine de travail automotrice selon au moins une des revendications précédentes, **caractérisée en ce que** le ou les capteurs (30, 34) détectent un débit de produit récolté dans la machine de travail (2).

6. Machine de travail automotrice selon au moins une des revendications précédentes, **caractérisée en ce que** la vitesse de marche (V) en fonctionnement à vide (6) est constante et présente une valeur qui correspond approximativement à la valeur de la vitesse de marche (V) au terme du fonctionnement actif (4) lors du passage en fonctionnement à vide (6) .

7. Machine de travail automotrice selon au moins une des revendications précédentes, **caractérisée en ce que** la machine de travail (2) est une moissonneuse-batteuse (1) qui, en fonctionnement actif (4), traverse une culture (3) et, en fonctionnement à vide (6), circule dans une tournière (5) .

8. Machine de travail automotrice selon la revendication 7, **caractérisée en ce que** le régulateur de marche avant (21) régule la vitesse de marche (V) en fonction de la perte à la séparation déterminée par l'équipement de mesure de flux de grains (35) et/ou de la hauteur de couche dans le convoyeur incliné (10) s'il détecte que la moissonneuse-batteuse (1) se trouve en fonctionnement actif (4).

9. Machine de travail automotrice selon au moins une des revendications précédentes, **caractérisée en ce qu'**au moins un des signaux (DS, SWS) générés par le ou les capteurs (23, 25) est fonction d'une manoeuvre du conducteur spécifique au fonctionnement à vide (6) ou au fonctionnement actif (4).

10. Machine de travail automotrice selon au moins une des revendications précédentes, **caractérisée en ce qu'**au moins un des signaux (PS) générés par le ou les capteurs (39) est fonction de la position de la machine de travail (2).

11. Machine de travail automotrice selon au moins une des revendications précédentes, **caractérisée en ce que** l'analyse des signaux (BS, SHS, DSS, VS, AS, SWS, DS, KVS) s'effectue dans une unité de commande et de régulation (22).
